# EUROPÄISCHE PATENTSCHRIFT

(11) **EP 1 222 407 B1**
(45) Veröffentlichungstag und Bekanntmachung des Hinweises auf die Patenterteilung: **19.11.2003**
(21) Anmeldenummer: 00983010.0
(22) Anmeldetag: 14.10.2000
(51) Int. Cl.: F16C 11/06, F16D 3/84

(54) **KUGELGELENK**
BALL JOINT
JOINT A ROTULE

(30) Priorität: 19.10.1999 EP 19950281
(43) Veröffentlichungstag der Anmeldung: 17.07.2002
(73) Patentinhaber: Sachsenring Fahrzeugtechnik GmbH, 08058 Zwickau (DE)
(72) Erfinder: STRAUCH, Jürgen, 08115 Lichtentanne (DE); WACKES, Ullrich, 08115 Lichtentanne (DE); RICHTER, Jürgen, 08435 Gospersgrün (DE); MÜHLSTÄDT, Harald, 08056 Zwickau (DE)
(74) Vertreter: Rumrich, Gabriele, Dipl.-Ing.
(86) Internationale Anmeldenummer: DE0003627
(87) Internationale Veröffentlichungsnummer: WO01029437

(56) Entgegenhaltungen:
- WO-A-00/55514
- DE-A- 19 750 830
- DE-A- 19 755 248
- DE-B- 1 286 823
- DE-C- 19 625 351
- DE-C- 19 747 931
- GB-A- 1 000 617
- GB-A- 1 132 169
- US-A- 3 248 955

## Beschreibung

Die Erfindung betrifft ein Kugelgelenk mit einer Aufnahme für einen Dichtungsbalg nach dem Oberbegriff des ersten Patentanspruchs.

Es sind zahlreiche Kugelgelenke bekannt, welche ein mit einem Hohlraum versehenes Gehäuse aufweisen, in dem die Kugel eines Kugelzapfens in einer Lagerschale beweglich gelagert ist. ( DE 197 55 248 A1, DE 197 50 830 A1, DE 196 25 351 C1). Die Abdichtung erfolgt sowohl gehäuseseitig als auch kugelzapfenseitig über einen Dichtungsbalg. Der Dichtungsbalg wird dabei am Gehäuse und am Außendurchmesser des Zapfens über Sicherungsringe befestigt.

Bei der Verbindung zwischen Dichtungsbalg und Kugelzapfen sind oftmals Undichtheiten zu verzeichnen, die zu einer Verschmutzung des Kugelgelenkes und somit zu erhöhtem Verschleiß und zum Ausfall führen können. Besonders kritisch ist es, bei in der Aufnahme axial verstellbaren Kugelgelenken ohne axiale Abdichtung des Dichtungsbolzens gegen die Aufnahme und großen Schwenk- und Drehwinkeln die Dichtheit zu gewährleisten.

Eine dabei bereits verbesserte Abdichtvariante zwischen Kugelzapfen und Dichtungsbalg wird in DE 197 47 931 C1 beschrieben. Dabei weist der Kugelzapfen einen Ringkragen auf, durch den ein Hinterschnitt gebildet wird, in welchen der Dichtungsbalg unter axialer Vorspannung eingesetzt wird. Der Dichtungsbalg wird über Spannringe radial gegen seine Anlagebereiche gepreßt. In einer Hohlkehle des Zapfens ist zusätzlich ein Abstandshalter angeordnet, der ein axiales Verschieben des Dichtungsbalges in Richtung Kugel verhindern soll. Diese Lösung ist relativ aufwendig und nicht einfach montierbar.

Eine Lösung bei welcher der schaftseitige zweite Dichtbereich von einem, auf dem Kugelzapfen angeordneten Zwischenring aufgenommen wird, beschreiben GB 1 132 169 A und DE 1 286 823. Der Zwischenring ist dabei einteilig ausgebildet und weist eine, in Richtung zum Kugelgehäuse gekröpfte Kante sowie eine beidseitige axiale Fixierung für den Dichtungsbalg auf. Nachteilig ist die fehlende axiale Fixierung des Zwischenringes auf dem Kugelzapfen und die ungenügende axiale und radiale Abdichtung des schaftseitigen Dichtbereiches des Dichtungsbalges, aufgrund der geradlinigen Dichtflächen des Zwischenringes.

Aufgabe der Erfindung ist es, eine einfache und zuverlässige Abdichtung zwischen einem Dichtungsbalg und dem Schaft des Kugelzapfens eines axial einstellbaren Kugelgelenks zu schaffen, welches zusätzlich einen großen Schwenk- und Drehwinkel gestattet.

Diese Aufgabe wird erfindungsgemäß mit den Merkmalen des ersten Patentanspruchs gelöst.

Das Kugelgelenk weist dabei in bekannter Weise ein Gehäuse mit einem Hohlraum zur Aufnahme einer beweglich gelagerten Kugel eines Kugelzapfens auf, sowie eine Öffnung in Richtung zum Kugelzapfen durch welche der Schaft des Kugelzapfens ragt. Weiterhin ist ein Dichtungsbalg vorgesehen, der einen gehäuseseitigen ersten Dichtbereich und einen schaftseitigen zweiten Dichtbereich aufweist. Der Schaft des Kugelzapfens ist an einer Gelenkaufnahme befestigbar. Erfindungsgemäß ist zwischen dem Schaft und dem zweiten Dichtbereich des Dichtungsbalges ein Zwischenring angeordnet, der die zuverlässige radiale und axiale Abdichtung zum zweiten Dichtbereich des Dichtungsbalges gewährleistet und den Dichtungsbalg gleichzeitig radial und axial fixiert.

Dazu weist der Zwischenring vorteilhafterweise an seinem Innendurchmesser eine radiale Einschnürung auf, die in eine Ausnehmung am Außendurchmesser des Schaftes des Kugelzapfens eingreift, wodurch der Zwischenring gegen axiales Verschieben gesichert ist.

Weiterhin kann am Zwischenring in Richtung zum Gehäuse ein erster Anschlag und in Richtung zur Gelenkaufnahme ein zweiter Anschlag für den zweiten Dichtbereich des Dichtungsbalges vorgesehen sein, wodurch wiederum das axiale Verschieben des zweiten Dichtungsbereiches verhindert wird.

Die radiale Abdichtung zwischen Dichtungsbalg und Zwischenring erfolgt über entsprechend angepaßte Innen-/Außendurchmesser, wobei vorteilhaft ist, wenn der Dichtungsbalg an seinem Innendurchmesser des zweiten Dichtbereiches in Richtung zum Zwischenring gewölbt ist und der Zwischenring in seiner Außenkontur dieser Wölbung folgt. Zusätzlich kann der Dichtungsbalg mit einer Labyrinthdichtung versehen sein. Die radiale Abdichtung wiederum zwischen Schaft und Zwischenring kann durch eine entsprechende geometrische Gestaltung, Passung und über einen an sich bekannten Rundring erfolgen.

Die axiale Abdichtung des Dichtungsbalges in seinem zweiten Dichtbereich erfolgt vorzugsweise an seiner in Richtung zur

Gelenkaufnahme weisenden Stirnfläche über eine Dichtlippe, die in eine Ringnut des Zwischenrings eingreift. Neben dieser Variante sind auch andere konstruktive Ausführungsformen zur Gewährleistung der axialen Abdichtung dieser beiden Bauteile möglich.

In Richtung zur Gelenkaufnahme kann der Zwischenring mit seiner Stirnfläche an der Gelenkaufnahme als Montagehilfe anliegen oder auch (je nach axialer Einstellung) von dieser beabstandet sein, wodurch ein Spalt zwischen der Gehäuseaufnahme und der Stirnfläche des Zwischenelementes entsteht.

Zur weiteren Verhinderung des Eindringens von Feuchtigkeit verfügt der Zwischenring vorteilhafterweise über eine über den Außendurchmesser des zweiten Dichtbereiches (D2) ragende und in Richtung zum Gehäuse gekröpfte Tropfkante.

Zur Gewährleistung einer starren und dichten Verbindung zwischen Schaft und Zwischenring ist es auch möglich eine Klebepreßverbindung zur Anwendung zu bringen.

Der Zwischenring kann aus metallischem Werkstoff, Kunststoff oder glaskugel- oder glasfaserverstärktem Kunststoff bestehen. Weiterhin ist es möglich, in den Kunststoff zumindest in den Bereichen, an welchen der Dichtungsbalg anliegt, Schmierstoff einzubetten, welcher die Reibung zwischen Dichtungsbalg und Zwischenring bei großen Drehbewegungen verringert. Bei der Verwendung glaskugel- öder glasfaserverstärkter Werkstoffe sollte gewährleistet werden, daß im Berührungsbereich zwischen Dichtungsbalg und Zwischenring diese Verstärkungsmaterialien nicht an der Oberfläche liegen.

Der Zwischenring kann einteilig oder zweiteilig ausgebildet sein.

Bei einteiliger Form wird der erste Anschlag für den zweiten Dichtbereich des Dichtungsbalges durch radiales Aufbiegen eines umlaufenden oder segmentförmig ausgebildeten Randbereiches des Zwischenringes nach der Montage des Dichtungsbalges und des Zwischenringes gebildet.

Ist der Zwischenring zweiteilig ausgebildet dichtet der in Richtung zur Kugel weisende erste Teil radial ab und bildet gleichzeitig den ersten Anschlag. Der zweite in Richtung zur Gelenkaufnahme weisende Teil des Zwischenringes dichtet den Dichtungsbalg axial ab und weist den zweiten Anschlag auf. Beide Teile können stoffschlüssig, kraftschlüssig oder formschlüssig miteinander verbunden sein. Ist der Zwischenring in Kunststoff ausgeführt, ist es vorteilhaft, die beiden Teile durch Ultraschallschweißen, Kleben oder Einknüpfen miteinander zu fügen.

Mit der erfindungsgemäßen Lösung wird insgesamt eine elegante und zuverlässige Abdichtung des Kugelgelenks gegen Feuchtigkeit und Verunreinigungen geschaffen.

Die Erfindung wird nachfolgend anhand von Ausführungsbeispielen und zugehörigen Zeichnungen näher erläutert. Es zeigen:
- Fig. 1:: an einer Gelenkaufnahme befestigtes Kugelgelenk in Schnittdarstellung mit an der Gelenkaufnahme anliegendem Zwischenring
- Fig. 2:: Kugelgelenk gem. Fig. 1 mit einem Spalt zwischen Gelenkaufnahme und Zwischenring
- Fig. 3:: Zwischenring in Vorderansicht,
- Fig. 4:: Schnitt A-A des Zwischenringes gem. Fig. 3,
- Fig. 5:: Schnitt durch Dichtungsbalg und einteiligen Zwischenring nach deren Montage,
- Fig. 6:: Schnitt durch Dichtungsbalg und zweiteiligen Zwischenring nach deren Montage,

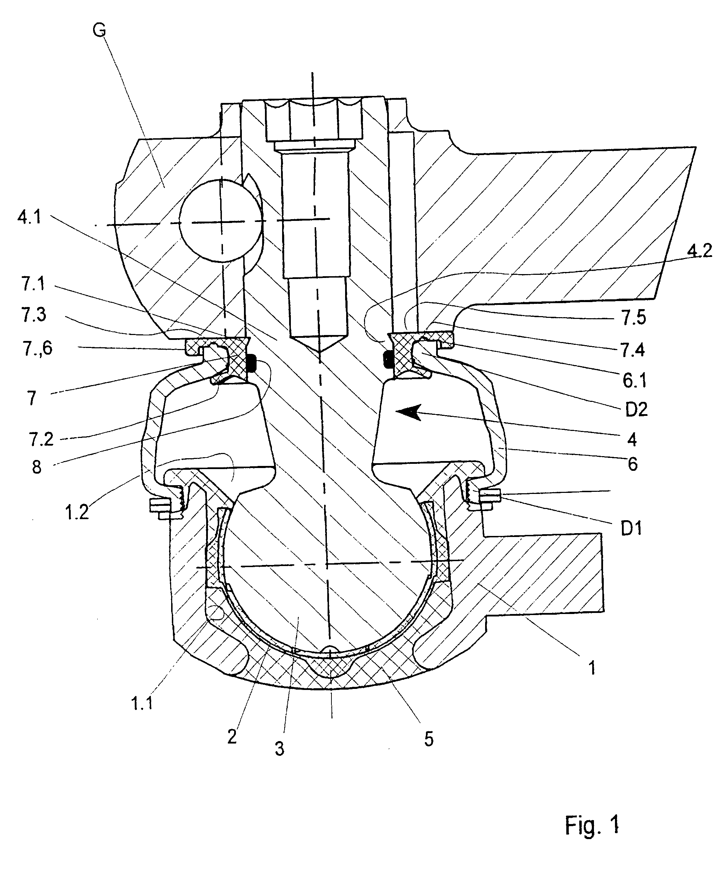

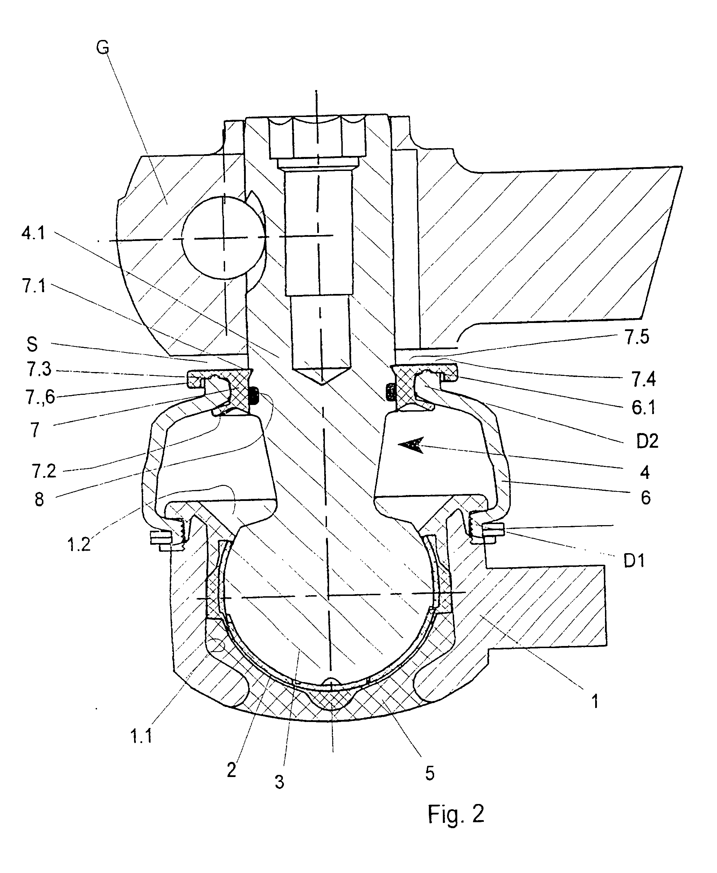

Das Kugelgelenk weist gem. Fig. 1 und 2 ein Gehäuse 1 mit einem Hohlraum 1.1 und einer Öffnung 1.2 zur Aufnahme einer in einer Lagerschale 2 beweglich gelagerten Kugel 3 eines Kugelzapfens 4 auf. Um die Lagerschale 2 herum wurde injizierbares Material 5 eingespritzt. Der Dichtungsbalg 6 ist mit seinem ersten Dichtbereich D1 am Gehäuse 1 und mit seinem zweiten Dichtbereich D2 am Zwischenring 7 befestigt, wobei der Zwischenring 7 auf dem Schaft 4.1 des Kugelzapfens 4 sitzt. Um die axiale Fixierung des Zwischenringes 7 auf dem Schaft zu gewährleisten, weist der Zwischenring an seinem Innendurchmesser eine radiale Einschnürung 7.1 auf, die in eine Ausnehmung 4.2 des Schaftes 4.1 eingreift. Axial ist der Dichtbereich D2 zwischen Anschlägen 7.2 und 7.3 des Zwischenringes lagefixiert. Gem. Fig. 1 kann der Zwischenring 7 mit seiner Stirnfläche 7.5 an der Gelenkaufnahme G für Montagezwecke anliegen. Weiterhin ist am Zwischenring 7 eine über den zweite Anschlußbereich D2 ragende und in Richtung zum Gehäuse 1 gekröpfte Tropfkante 7.6 angeordnet. Zwischen Schaft 4.1 und Zwischenring 7 ist zur Abdichtung ein Rundring 8 vorgesehen. An der in Richtung zur Gelenkaufnahme G weisenden Stirnfläche des Dichtungsbalges ist zur axialen Abdichtung eine Dichtlippe 6.1 vorgesehen, die in eine entsprechende Ringnut 7.4 des Zwischenringes 7 eingreift.

In Fig. 2 ist ein analoger Aufbau eines Kugelgelenkes dargestellt, bei welcher jedoch nach axialer Einstellung ein Spalt S zwischen Gelenkaufnahme und Zwischenring 7 vorhanden ist. Durch die Verwendung des Zwischenringes 7 ist nunmehr eine sichere Abdichtung des Kugelgelenkes gegeben.

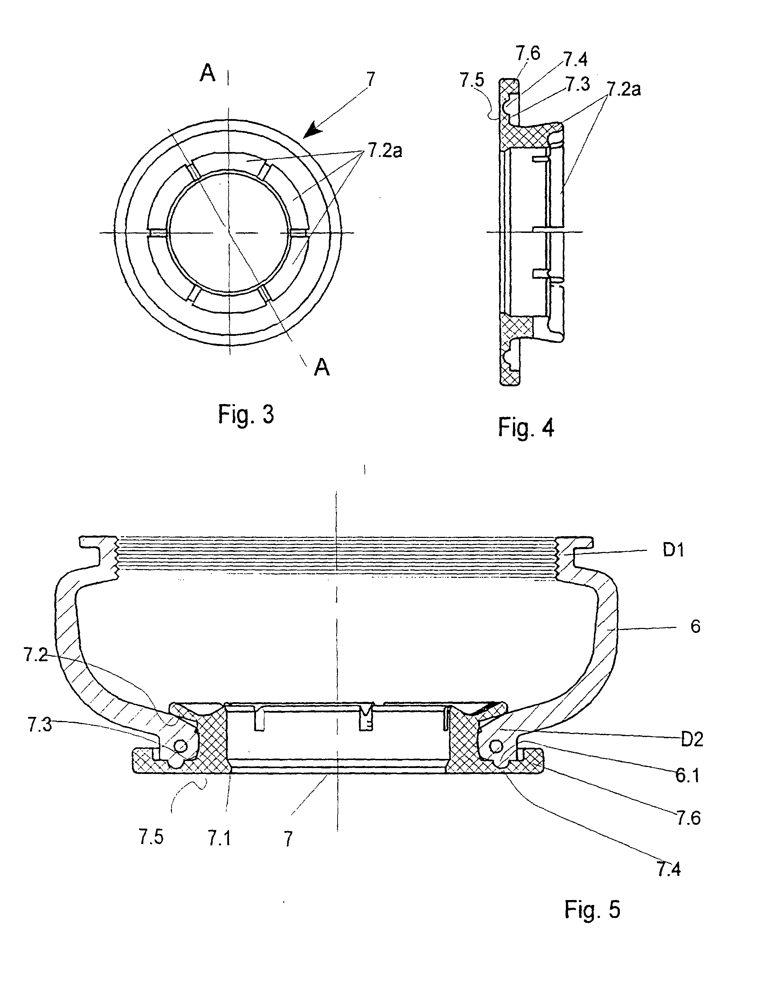

Die Ansicht des einteiligen Zwischenringes 7 (vor der Montage) aus Richtung Gehäuse 1 ist in Fig. 3 und dessen Schnitt A-A in Fig. 4 dargestellt. Der einteilige Zwischenring 7 weist in Richtung zum Gehäuse 1 einen segmentierten Kunststoffsteg 7.2a auf. Daran schließt sich der Aufnahmebereich für den Dichtungsbalg 6 an. Die flanschartige Erweiterung bildet nach der Montage den zweiten Anschlag 7.3. An den Außendurchmesser des Flanschbereiches schließt sich die Tropfkante 7.6 an. Die einzelnen Stege 7.2a sind vor der Montage im wesentlichen axial ausgerichtet. Der Dichtbereich D2 des Dichtungsbalges 6 wird nun bis zur Anlage am Anschlag 7.3 über den Zwischenring geschoben. Nun werden bei Verwendung eines einteiligen Zwischenringes aus Kunststoff mittels Wärmeeinwirkung oder Ultraschall die segmentierten Kunststoffstege 7.2a radial nach außen gebogen, so daß sie als Anschlag 7.2 den Dichtungsbalg 6 axial fixieren (Fig. 5). Anstelle von Stegen ist es auch möglich, einen umlaufenden Rand entsprechend umzuformen.

Bei einem metallischen Zwischenring erfolgt dies z.B. durch Umbördeln.

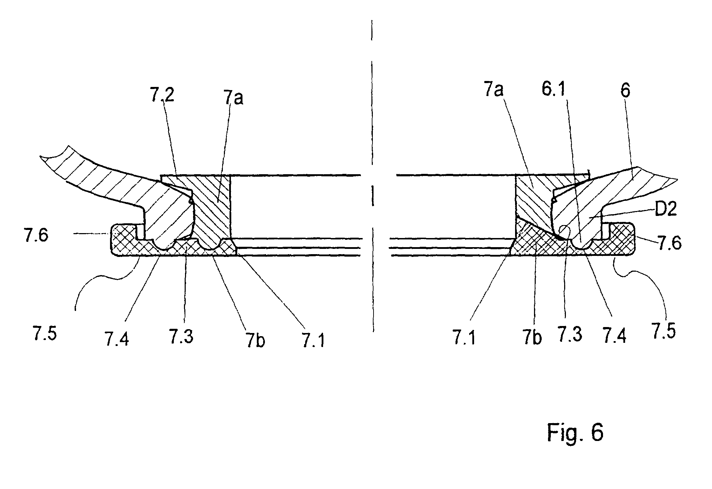

Das Ausführungsbeispiel eines zweiteiligen Zwischenringes 7 mit montiertem Dichtungsbalg 6 zeigt Fig. 6.

Auf der linken Seite ist dabei zur Verbindung der beiden Teile eine Wulst im ersten Teil 7a und eine entsprechende Ausnehmung im zweiten Teil 7b vorgesehen. Auf der rechten Seite werden beide Teile 7a, 7b über eine aneinander anliegende Schräge verbunden. Die in der linken Seite dargestellte konstruktive Variante ist dabei günstig, wenn die Verbindung durch Ultraschallschweißen erfolgen soll, die rechts gezeigte Variante mit der Schräge ist für eine Klebeverbindung besser geeignet.

Der erste Teil 7a des Zwischenringes 7 dichtet in beiden Fällen radial ab und weist den ersten Anschlag 7.2 auf. Der zweite Teil 7b des Zwischenringes 7 dichtet den Dichtungsbalg 6 an seinem Dichtbereich D2 in Richtung zur nicht dargestellten Gelenkaufnahme axial ab. An diesem ist auch der zweite Anschlag 7.3 vorgesehen.

Beide Teile bestehen aus Kunststoff und wurden bevorzugt durch Ultraschallschweißen oder Kleben miteinander verbunden. Bei der zweiteiligen Ausführung wird der Dichtbereich D2 des Dichtungsbalges 6 zuerst über den ersten Teil 7a des Zwischenringes 7 geschoben, bis dessen erster Anschlag 7.2 unten am Dichtbereich D2 anliegt.

Anschließend wird der zweite Teil 7b des Zwischenringes am ersten Teil 7a so positioniert, daß der zweite Anschlag oben am Dichtbereich D2 des Dichtungsbalges 6 zur Anlage kommt und die Dichtlippe 6.1 des Dichtungsbalges 6 in die entsprechende Ringnut 7.4 eingreift. Nun werden beide Teile 7a und 7b durch Ultraschallschweißen oder Kleben miteinander verbunden.

Gemäß weiterer nicht dargestellter Ausführungsbeispiele kann die Teilungsebene des Zwischenrings 7 zur Bildung der beiden Teile 7a und 7b auch anders positioniert werden.

Durch den Zwischenring ergibt sich neben einer zuverlässigen radialen und axialen Abdichtung auch eine verbesserte Handhabung bei der Montage des Dichtungsbalges.

## Patentansprüche

1. Kugelgelenk, welches ein Gehäuse (1) mit einem Hohlraum (1.1) zur Aufnahme einer beweglich gelagerten Kugel (3) eines Kugelzapfens (4) aufweist, mit einer Öffnung (1.2) in dem in Richtung zum Kugelzapfen (4) weisenden Randbereich des Gehäuses, durch welchen der Schaft (4.1) des Kugelzapfens (4) ragt und mit einem Dichtungsbalg (6), der einen gehäuseseitigen ersten Dichtbereich (D1) und einen schaftseitigen zweiten Dichtbereich (D2) aufweist, wobei der Schaft (4.1) an einer Gelenkaufnahme (G) befestigbar ist, und zwischen dem Schaft (4.1) und dem zweiten Dichtbereich (D2) des Dichtungsbalges (6) ein Zwischenring (7) angeordnet ist, **dadurch gekennzeichnet, dass** der Dichtungsbalg (6) an seiner in Richtung zur Gelenkaufnahme (G) weisenden Stirnfläche eine Dichtlippe (6.1) aufweist, die in eine Ringnut (7.4) des Zwischenrings (7) formschlüssig eingreift.

2. Kugelgelenk nach Anspruch 1, **dadurch gekennzeichnet, dass** der Zwischenring (7) zweiteilig ausgebildet ist, wobei ein erster Teil (7a) des Zwischenringes (7) radial zum Kugelzapfen (4) und zum zweiten Dichtbereich (D2) des Dichtungsbalges (6) abdichtet und einen ersten Anschlag (7.2) für den Dichtbereich (D2) in Richtung zum Gehäuse (1) aufweist und ein zweiter Teil (7b) des Zwischenringes (7)den Dichtbereich (D2) axial abdichtet und einen zweiten Anschlag (7.3) für den Dichtbereich (D2) in vom Gehäuse (1) abgewandter Richtung aufweist.

3. Kugelgelenk nach Anspruch 2, **dadurch gekennzeichnet, dass** beide Teile (7a, 7b) des Zwischenringes (7) stoffschlüssig, kraftschlüssig oder formschlüssig miteinander verbunden sind.

4. Kugelgelenk nach Anspruch 2 oder 3, **dadurch gekennzeichnet, dass** beide Teile (7a, 7b) des Zwischenringes (7) durch Ultraschallschweißen miteinander verbunden sind.

5. Kugelgelenk nach einem der Ansprüche 2 bis 4, **dadurch gekennzeichnet, dass** beide Teile (7a, 7b) des Zwischenringes (7) miteinander durch Einknüpfen verbunden sind.

6. Kugelgelenk nach einem der Ansprüche 1 bis 5, **dadurch gekennzeichnet, dass** der Zwischenring (7) an seinem Innendurchmesser (7.2) eine radiale Einschnürung (7.1) aufweist, die in eine Ausnehmung (4.2) am Außendurchmesser des Schaftes (4.1) des Kugelzapfens (4) eingreift.

7. Kugelgelenk nach einem der Ansprüche 1 bis 6, **dadurch gekennzeichnet, dass** der Zwischenring (7) eine über den Außendurchmesser des zweiten Dichtbereiches (D2) ragende und in Richtung zum Gehäuse (1) gekröpfte Tropfkante (7.6) aufweist.

8. Kugelgelenk nach einem der Ansprüche 1 bis 7, **dadurch gekennzeichnet, dass** zwischen dem Außendurchmesser des Schaftes (4.1) des Kugelzapfens (4) und dem Innendurchmesser des Zwischenringes (7) ein deren radiales Abdichten gewährleistender Rundring (8) angeordnet ist.

9. Kugelgelenk nach einem der Ansprüche 1 bis 8, **dadurch gekennzeichnet, dass** Schaft (4.1) und Zwischenring (7) über eine Klebepressverbindung miteinander verbunden sind.

10. Kugelgelenk nach einem der Ansprüche 1 bis 9, **dadurch gekennzeichnet, dass** der Zwischenring (7) aus nichtrostendem Stahl besteht.

## Claims

1. A ball-and-socket joint which comprises a housing (1) with a hollow space (1.1) for receiving a movably held ball (3) of a ball pivot (4), with an opening (1.2) in the edge zone of the housing facing in the direction towards the ball pivot (4), through which the shaft (4.1) of the ball pivot (4) projects , and with a sealing bellows (6) comprising a first sealing zone (D1) on the housing side and a second sealing zone (D2) on the shaft side, with the shaft (4.1) being fastenable to a joint receiving means (G) and with an intermediate ring (7) being arranged between the shaft (4.1) and the second sealing zone (D2) of the sealing bellows (6), **characterized in that** the sealing bellows (6) comprises a sealing lip (6.1) on its face side facing in the direction towards the joint receiving means (G), which sealing lip engages in an annular groove (7.4) of the intermediate ring (7) in a positive-locking fashion.

2. A ball-and-socket joint as claimed in claim 1, **characterized in that** the intermediate ring (7) is arranged in two parts, with a first part (7a) of the intermediate ring (7) sealing in a radial manner with respect to the ball pivot (4) and with respect to the second sealing zone (D2) and comprising a first stop (7.2) for the sealing zone (D2) in the direction towards the housing (1) and a second part (7b) of the intermediate ring (7) axially sealing the sealing zone (D2) and comprising a second stop (7.3) for the sealing zone (D2) in the direction averted from the housing (1) .

3. A ball joint as claimed in claim 2, **characterized in that** both parts (7a, 7b) of the intermediate ring (7) are mutually connected in a firm material, non-positive or positive manner.

4. A ball joint as claimed in claim 2 or 3, **characterized in that** both parts (7a, 7b) of the intermediate ring (7) are mutually connected by ultrasonic welding.

5. A ball joint as claimed in one of the claims 2 to 4, **characterized in that** both parts (7a, 7b) of the intermediate ring (7) are mutually connected by binding.

6. A ball joint as claimed in one of the claims 1 to 5, **characterized in that** the intermediate ring (7) comprises a radial constriction (7.1) on its interior diameter (7.2) which engages in a recess (4.2) on the outer diameter of the shaft (4.1) of the ball pivot (4) .

7. A ball joint as claimed in one of the claims 1 to 6, **characterized in that** the intermediate ring (7) comprises a drop edge (7.6) which projects beyond the outer diameter of the second sealing zone (D2) and is bent in the direction towards the housing (1).

8. A ball joint as claimed in one of the claims 1 to 7, **characterized in that** a round ring (8) is arranged between the outer diameter of the shaft (4.1) of the ball pivot (4) and the inner diameter of the intermediate ring (7), which round ring ensures their radial sealing.

9. A ball joint as claimed in one of the claims 1 to 8, **characterized in that** the shaft (4.1) and the intermediate ring (7) are mutually connected by way of a gluing press bond.

10. A ball joint as claimed in one of the claims 1 to 9, **characterized in that** the intermediate ring (7) consists of stainless steel.

## Revendications

1. Joint à rotule présentant un logement (1) avec une cavité (1.1) destinée à recevoir une sphère (3) d'un pivot à rotule (4) supportée de façon mobile, avec une ouverture (1.2) dans la partie de bord du logement orientée en direction du pivot à rotule (4), à travers laquelle dépasse le corps (4.1) du pivot à rotule (4), et avec un soufflet d'étanchéité (6) présentant un premier secteur d'étanchéité (D1) du côté du logement et un second secteur d'étanchéité (D2) du côté du corps, le corps (4.1) pouvant être fixé sur un réceptacle d'articulation (G), et il est prévu entre le corps (4.1) et le second secteur d'étanchéité (D2) du soufflet d'étanchéité (6) une bague intermédiaire (7), **caractérisé en ce que** le soufflet d'étanchéité (6) présente sur sa face orientée vers le réceptacle d'articulation (G) une lèvre d'étanchéité (6.1) qui se met en prise par engagement de la forme dans une rainure annulaire (7.4) de la bague intermédiaire (7).

2. Joint à rotule selon la revendication 1, **caractérisé en ce que** la bague intermédiaire (7) est conçue en deux parties, une première partie (7a) de la bague intermédiaire (7) assurant l'étanchéité dans le sens radial par rapport au pivot à rotule (4) et au deuxième secteur d'étanchéité (D2) du soufflet d'étanchéité (6) et présentant une première butée (7.2) pour le secteur d'étanchéité (D2) en direction du logement (1) et une seconde partie (7b) de la bague intermédiaire (7) assurant l'étanchéité du secteur d'étanchéité (D2) dans le sens axial et présentant une seconde butée (7.3) pour le secteur d'étanchéité (D2) dans le sens opposé au logement (1).

3. Joint à rotule selon la revendication 2, **caractérisé en ce que** les deux parties (7a, 7b) de la bague intermédiaire (7) sont reliées entre elles par solidarité du matériau, par adhérence ou par engagement de la forme.

4. Joint à rotule selon la revendication 2 ou 3, **caractérisé en ce que** les deux parties (7a, 7b) de la bague intermédiaire (7) sont assemblées entre elles par soudage par ultrasons.

5. Joint à rotule selon l'une quelconque de revendication 2 à 4, **caractérisé en ce que** les deux parties (7a, 7b) de la bague intermédiaire (7) sont reliées entre elles par emboîtement.

6. Joint à rotule selon l'une quelconque des revendications 1 à 5, **caractérisé en ce que** la bague intermédiaire (7) présente sur son diamètre intérieur (7.2) un resserrement radial (7.1) qui se met en prise dans un évidement (4.2) sur le diamètre extérieur du corps (4.1) du pivot à rotule (4).

7. Joint à rotule selon l'une quelconque des revendications 1 à 6, **caractérisé en ce que** la bague intermédiaire (7) présente un bord d'égouttage (7.6) faisant saillie au-delà du diamètre extérieur du second secteur d'étanchéité (D2) et recourbé en direction du logement (1).

8. Joint à rotule selon l'une quelconque de revendications 1 à 7, **caractérisé en ce qu'**il est prévu entre le diamètre extérieur du corps (4.1) du pivot sphérique (4) et le diamètre intérieur de la bague intermédiaire (7) un joint rond (8) assurant l'étanchéité radiale de ceux-ci.

9. Joint à rotule selon l'une quelconque de revendications 1 à 8, **caractérisé en ce que** le corps (4.1) et la bague intermédiaire (7) sont assemblés entre eux par collage pressé.

10. Joint à rotule selon l'une quelconque de revendications 1 à 9, **caractérisé en ce que** la bague intermédiaire (7) est composée d'acier inoxydable.
